# FASCICULE DE BREVET EUROPEEN

(11) **EP 0 666 230 B1**
(45) Date de publication et mention de la délivrance du brevet: **10.12.1997**
(21) Numéro de dépôt: 95810014.1
(22) Date de dépôt: 10.01.1995
(51) Int. Cl.: B65G 47/64, B65B 35/24

(54) **Procédé de conditionnement de produits, notamment de produits alimentaires, et dispositif pour la mise en oeuvre de ce procédé**
Verfahren zum Verpacken von Gegenständen, insbesondere Nahrungsmitteln und Vorrichtung zur Ausübung des Verfahrens
Method for packaging products, especially food products, and device for executing the method

(30) Priorité: 04.02.1994 FR 9401368
(43) Date de publication de la demande: 09.08.1995
(73) Titulaire: SAPAL, Société Anonyme des Plieuses Automatiques, 1024 Ecublens (CH)
(72) Inventeur: Gerber, Jean-Paul, CH-1026 Echandens (CH)
(74) Mandataire: Nithardt, Roland

(56) Documents cités:
- EP-A- 0 057 806
- EP-A- 0 588 123
- DE-A- 2 516 583

## Description

La présente invention concerne un procédé de conditionnement de produits, notamment de produits alimentaires fragiles et délicats tels que par exemple des tablettes de chocolat, des bouchées, biscuits ou similaires, de petites dimensions, enrobées ou non de chocolat, disposés par rangées ou par lits constitués d'un ensemble de rangées parallèles, dans lequel on transfère lesdits produits d'un ruban d'alimentation d'une ligne de conditionnement sur un ruban transversal disposé perpendiculairement à ce ruban d'alimentation.

Elle concerne également un dispositif de conditionnement de produits, notamment de produits alimentaires fragiles et délicats tels que par exemple des tablettes de chocolat, des bouchées, biscuits ou similaires, de petites dimensions, enrobées ou non de chocolat, disposés par rangées ou par lits constitués d'un ensemble de rangées parallèles, dans lequel on transfère lesdits produits d'un ruban d'alimentation d'une ligne de conditionnement sur un ruban transversal disposé perpendiculairement à ce ruban d'alimentation pour la mise en oeuvre du procédé.

Dans les lignes de conditionnement de produits, notamment de produits alimentaires délicats tels que par exemple les tablettes de chocolat qui sont habituellement disposées en rangées ou les petits produits tels que les bouchées ou similaires enrobées ou non de chocolat, le cheminement de ces produits et leur distribution aux unités de conditionnement ou machines d'emballage s'effectuent sur des rubans transporteurs sans fin, ou convoyeurs à bande. Les machines d'emballage sont généralement disposées en bout de rubans transversaux dont l'axe est perpendiculaire aux rubans d'alimentation de la ligne. Chaque ligne dispose de moyens agencés pour prélever des produits sur les rubans d'alimentation et pour les déposer sur les rubans transversaux.

De tels moyens sont décrits par exemple par le brevet suisse No. 558'749. Au moment du dépôt des produits sur un ruban transversal, l'extrémité du ruban d'alimentation amont, munie d'un bec pivotant, s'abaisse sur le ruban transversal déplacé en translation dans une position de réception. Lorsque les produits sont effectivement déposés, le ruban transversal reprend une position de travail et amène le produit à la machine d' emballage correspondante.

Ce type de dispositif connu a subi diverses évolutions et des perfectionnements qui présentent tous les mêmes défauts. Ils ne permettent pas de travailler à cadence élevée car le déplacement en translation du ruban transversal induit un temps mort qui réduit cette cadence. En outre, les mécanismes de déplacement en translation du ruban transversal sont compliqués et coûteux. En effet, le ruban transversal avec son support représente une masse relativement lourde. Son déplacement entraîne une dépense en énergie élevée en raison de son inertie.

La présente invention se propose de pallier ces différents inconvénients et réalise un dispositif mettant en oeuvre un procédé qui permet d'assurer de façon rapide, efficace et moins coûteuse, le transfert des produits disposés en rangées ou des lits de produits, de rubans d'alimentation sur des rubans transversaux, soit pour distribuer les produits aux machines d'emballage, soit pour recycler des produits momentanément stockés et les réinsérer dans la ligne.

Ce but est atteint par le procédé selon l'invention, caractérisé que ce que l'on utilise un module de transfert et de dépôt comportant un ruban convoyeur sans fin qui se prolonge par un bec mobile orientable et extensible, et un module d'alimentation comportant le ruban d'alimentation, ce ruban étant pourvu d'une extrémité mobile servant d'aiguillage entre le ruban transversal et le ruban d' alimentation suivant et le ruban convoyeur étant agencé pour, dans une première phase opératoire, recevoir les produits dudit ruban d'alimentation et pour, dans une deuxième phase opératoire, déposer ces produits sur le ruban transversal d'un module transversal en étendant et en abaissant son bec orientable et extensible, puis rétracter et relever ledit bec pour le positionner en attente pour de nouveaux produits.

De façon avantageuse, l'on utilise, à l'extrémité de la ligne, une bande transporteuse pour stocker temporairement des rangées ou lits de produits en vue de leur recyclage sur cette ligne, cette bande transporteuse étant pourvue d'une extrémité mobile servant d' aiguillage et agencée pour transférer les produits stockés audit module de transfert et de dépôt correspondant.

Dans ce procédé l'on peut également utiliser une station de stockage intermédiaire pourvue d'une bande sans fin pour stocker temporairement des produits entre deux modules transversaux successifs correspondant respectivement à deux unités de conditionnement successives de la ligne.

Ce but est également atteint par le dispositif selon l'invention, caractérisé en ce qu'il comporte un module de transfert et de dépôt comportant un ruban convoyeur sans fin qui se prolonge par un bec orientable et extensible, et un module d'alimentation comportant le ruban d'alimentation, ce ruban étant pourvu d'une extrémité mobile servant d'aiguillage entre le ruban transversal et le ruban d'alimentation suivant, et le ruban convoyeur étant agencé pour, dans une première phase opératoire recevoir les produits dudit ruban d'alimentation et pour, dans une deuxième phase opératoire, déposer ces produits sur le ruban transversal d'un module transversal en étendant et en abaissant son bec orientable et extensible, puis rétracter et relever ledit bec pour le positionner en attente pour de nouveaux produits.

De façon avantageuse, le dispositif comporte à l'extrémité de la ligne, une bande transporteuse pour stocker temporairement des rangées ou lits de produits en vue de leur recyclage sur cette ligne, cette bande transporteuse étant pourvue d'une extrémité mobile servant d'aiguillage et agencée pour transférer les produits stockés audit module de transfert et de dépôt correspondant.

Dans une forme de réalisation préférée, le ruban convoyeur sans fin du module de transfert et de dépôt comporte une roue de tension agencée pour se déplacer entre une première position, correspondant à la position rétractée du bec orientable et extensible, et une seconde position correspondant à la position étendue de ce bec.

De préférence, ledit bec orientable et extensible est pivotant et est agencé pour occuper une première position relevée dans laquelle il peut recevoir des produits en provenance du ruban d'alimentation et une deuxième position abaissée dans laquelle il peut déposer ces produits sur le ruban transversal.

Dans une variante de réalisation le dispositif peut comporter une station de stockage intermédiaire pourvue d'une bande sans fin pour stocker temporairement des produits entre deux modules transversaux successifs correspondant respectivement à deux unités de conditionnement successives de la ligne.

L'invention sera mieux comprise en référence à la description d'exemples de réalisation et aux dessins annexés dans lesquels :
- la figure 1 représente une vue schématique du dispositif selon l'invention au début d'une phase de transfert des produits sur le ruban transversal,
- la figure 2 représente une vue schématique similaire à celle de la figure 1, mais correspondant à une étape intermédiaire de cette phase de transfert, les produits étant en position d'attente,
- la figure 3 représente une vue schématique similaire à celle des figures 1 et 2, mais correspondant au dépôt des produits sur le ruban transversal,
- la figure 4 représente une vue schématique similaire aux vues des figures précédentes, mais correspondant à la fin du transfert des produits,
- la figure 5 représente la fin du cycle et correspond sensiblement à la figure 1,
- les figures 6 et 7 représentent des vues schématiques similaires à celles des figures précédents mais illustrant une opération de recyclage de produits temporairement stockés en fin de ligne,
- les figures 8 et 9 représentent une variante dans laquelle le dispositif selon l'invention est associé à une station de stockage intermédiaire, et
- la figure 10 représente une variante dans laquelle la position du module de transfert est inversée.

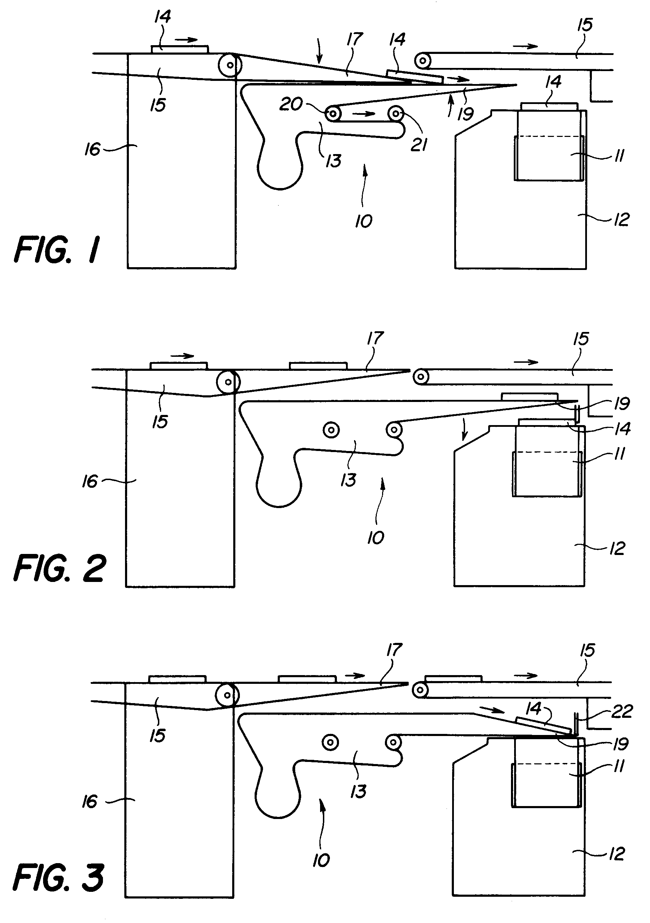

En référence aux figures, le dispositif 10 représenté s'insère dans une ligne de conditionnement automatique en amont du ruban transversal 11 d'un module transversal 12 qui correspond à une unité de conditionnement. En général, une ligne de conditionnement comporte une succession de rubans d'alimentation, disposés linéairement dans le prolongement les uns des autres, qui ont pour fonction de véhiculer les produits vers des stations d'emballage. A chaque station d'emballage est associé un module transversal qui prélève une partie des produits acheminés par le ruban d'alimentation disposé en amont pour les amener à la station d' emballage correspondante. Les produits non prélevés par le module transversal sont transférés sur le module d'alimentation aval pour être acheminés vers une des stations d'emballage suivantes. Le dispositif 10 comprend donc essentiellement un module de transfert et de dépôt 13 de produits 14 qui sont acheminés par un ruban d'alimentation 15 d'un module d'alimentation 16. Dans ce module, l'extrémité 17 du ruban d'alimentation 15 est mobile et est susceptible de pivoter entre deux positions de travail pour servir d' aiguillage entre le ruban d'alimentation suivant ou le module de transfert 13. Dans une première position de travail dite position haute, visible sur la figure 2, l'extrémité mobile 17 est disposée au niveau du ruban d'alimentation 15 de l'unité de conditionnement suivante (non représentée) de la ligne de conditionnement.

Dans une deuxième position, dite position basse, représentée par la figure 1, l'extrémité mobile 17 est orientée vers le module de transfert et de dépôt 13 pour y déposer les produits 14, de préférence disposés en rangée ou en lits, lorsqu'il s'agit de produits de petites dimensions.

Le module de transfert et de dépôt 13 est constitué essentiellement d'un ruban convoyeur sans fin qui se prolonge par un bec orientable et extensible 19. L'extension de ce bec est réalisée grâce au déplacement d'une roue de tension 20 qui peut être amenée dans une position correspondant à la référence 21. Dans la position représentée par la figure 1, le bec 19 est rétracté et relevé. Cette position correspondant au début d'une phase de transfert des produits ou au début d'une phase d'attente. En effet comme le montre cette figure, ces produits 14 sont en place sur le ruban transversal 11, et en train d'être évacués en direction d'une machine d' emballage. La série suivante de produits 14 est transférée par l'extrémité mobile 17, en position basse, sur le bec orientable et extensible 19, en position relevée et rétractée. Dès que ces produits sont effectivement transférés, l'extrémité mobile 17 peut reprendre sa position haute et assurer la liaison avec le ruban d'alimentation suivant. Pour le module de transfert et de dépôt 13, deux modes opératoires sont possibles. Soit les produits 14 se trouvant sur le ruban transversal 11 sont effectivement évacués et l'opération de transfert peut avoir lieu. Soit ces produits ne sont pas encore évacués et les produits suivants peuvent rester en attente sur le module 13 sans que le fonctionnement des autres éléments de la lignes soit perturbé.

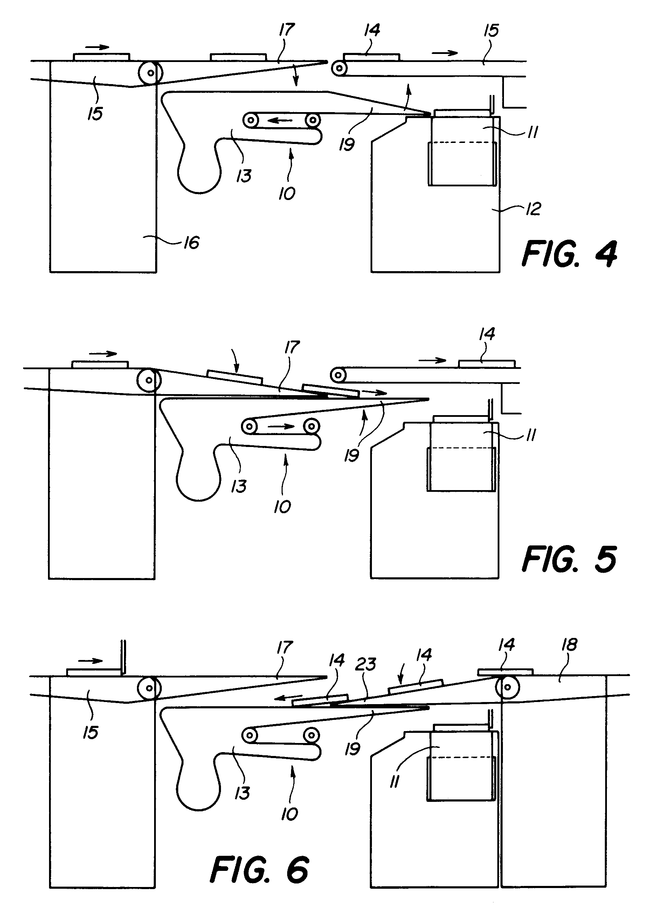

Dans les deux cas, le bec 19 s'allonge et prend sa position étendue, représentée par la figure 2. Dès que la voie est libre sur le ruban transversal 11, il s'oriente dans sa position abaissée représentée par la figure 3 pour amener les produits en butée contre un guide latéral 22. Cette opération de transfert et de dépôt des produits 14 s'achève lorsque le bec toujours abaissé reprend sa position rétractée comme le montre la figure 4.

Pour revenir de sa position représentée par la figure 4 dans sa position initiale correspondant à la figure 5, le bec orientable et extensible 19 est relevé, prêt à recevoir de nouveaux produits 14. Cette position est identique à celle de la figure 1, mais dans cette figure les produits se suivent à une cadence plus élevée.

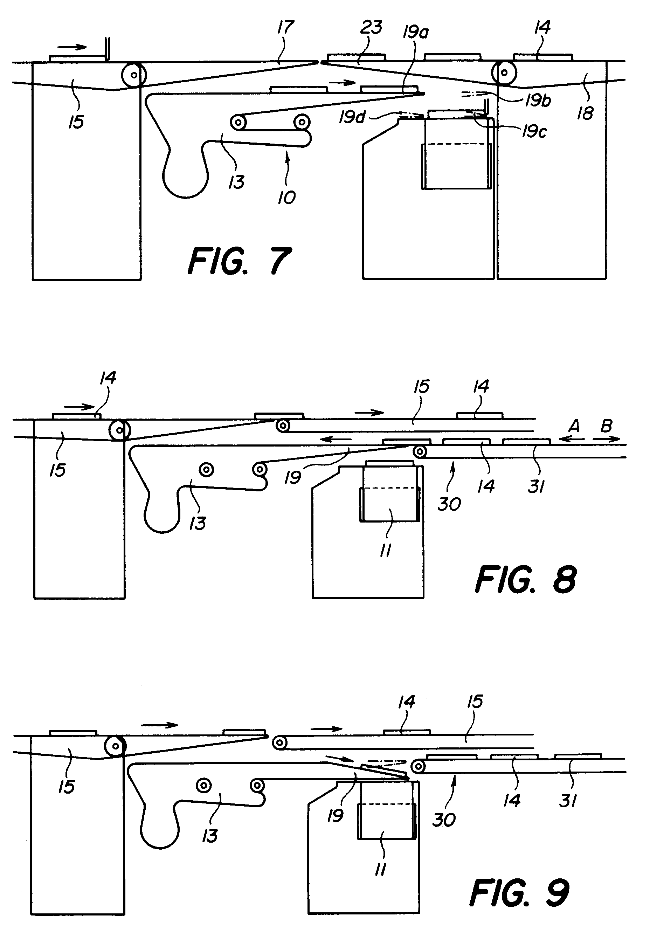

Le module de transfert et de dépôt 13 peut également être avantageusement utilisé pour recycler des produits qui ont été stockés temporairement. Dans ce cas la ligne de conditionnement comporte à son extrémité une bande transporteuse 18 qui a une fonction de ruban de stockage et qui comporte à cet effet une extrémité mobile 23 sensiblement identique à l'extrémité mobile 17, tant par sa construction que par sa fonction. Dans un premier temps représenté par la figure 6, le ruban convoyeur du module 13 tourne dans le sens opposé à celui dans lequel il tournait au cours des phases opératoires illustrées précédemment et ceci afin de recevoir les produits 14 déposés par la bande transporteuse 18 dont l'extrémité mobile 23 est en position basse. Dès que ces produits sont effectivement transférés sur ce ruban, il est entraîné dans le sens opposé et les opérations correspondant aux figures 2, 3, 4 et 5 peuvent se dérouler normalement en vue du transfert et du dépôt des produits sur le ruban transversal 11. Ces opérations sont schématisées sur la figure 7 où sont représentées les positions extrêmes 19a, 19b, 19c et 19d du bec orientable et extensible 19. Dans cette utilisation le module de transfert et de dépôt 13 est avantageusement placé en queue de ligne, c'est-à-dire avant la dernière machine d'emballage.

Les figures 8 et 9 représentent une variante de réalisation dans laquelle le module de transfert et de dépôt 13 est utilisé comme un aiguillage destiné à diriger les produits en rangées ou en lits soit vers le ruban transversal 11, soit vers une station de stockage intermédiaire 30. Cette station comporte essentiellement une bande sans fin 31 qui est susceptible de se déplacer dans deux sens opposés comme le montrent les flèches A et B et qui est destinée à stocker momentanément des produits, ou des rangées ou des lits de produits, qui seront ensuite réinjectés dans la ligne, plus particulièrement sur le ruban transversal. La bande sans fin 31 est disposée sous le ruban d'alimentation 15 de l'unité de conditionnement suivante, c'est-à-dire entre deux modules transversaux successifs.

Sur la figure 8, le bec orientable et extensible 19 est situé au niveau de la bande sans fin 31 pour transférer ou recevoir des produits. Dans le premier cas, ces produits viennent du ruban d'alimentation 15 et sont transférés sur la station de stockage intermédiaire 30. Dans le deuxième cas, l'opération est inversée.

Sur la figure 9, le bec orientable et extensible 19 est orienté vers le ruban transversal 11 pour y déposer des produits en provenance de la station de stockage intermédiaire 30.

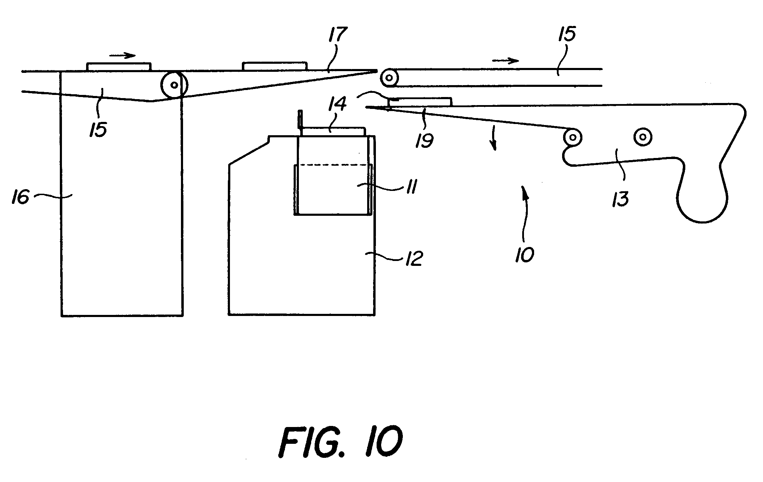

La figure 10 représente une variante dans laquelle la position du module de transfert et de dépôt 13 est inversée par rapport à sa position sur les autres figures. Le fonctionnement de l'ensemble reste identique, mais cette disposition permet de réduire l'encombrement. Les produits en provenance du ruban d'alimentation 15 sont déposés sur le module de transfert et de dépôt 13 ou restent sur ce ruban, c'est-a-dire qu'ils sont transférés sur le tronçon suivant de ce ruban.

L'ensemble de la ligne est constituée de modules indépendants, ce qui permet à la fois une grande souplesse de construction et d'utilisation des nombreuses variantes possibles réalisables à partir du procédé selon l'invention. Les modules peuvent être disposés d'une manière qui est la mieux adaptée à la place disponible et qui répond aux exigences de l'utilisateur. La maintenance est grandement facilitée et un agrandissement ou une modification de la ligne peut être effectué facilement par adjonction de modules.

## Revendications

1. Procédé de conditionnement de produits, notamment de produits alimentaires (14) fragiles et délicats, disposés par rangées ou par lits constitués d'un ensemble de rangées parallèles, dans lequel on transfère lesdits produits d'un ruban d'alimentation (15) d'une ligne de conditionnement sur un ruban transversal (11) disposé perpendiculairement à ce ruban d'alimentation, caractérisé en ce que l'on utilise un module de transfert et de dépôt (13) comportant un ruban convoyeur sans fin qui se prolonge par un bec orientable et extensible (19), et un module d'alimentation (16) comportant le ruban d'alimentation (15), ledit ruban d'alimentation étant pourvu d'une extrémité mobile (17) servant d'aiguillage entre le ruban transversal (11) et un ruban d'alimentation (15) suivant, et le ruban convoyeur sans fin étant agencé pour, dans une première phase opératoire, recevoir les produits dudit ruban d'alimentation et pour dans une deuxième phase opératoire, déposer ces produits sur le ruban transversal (11) d'un module transversal (12) en étendant et en abaissant son bec orientable et extensible, puis rétracter et relever ledit bec pour le positionner en attente pour de nouveaux produits.

2. Procédé selon la revendication 1, caractérisé en ce que l'on utilise, à l'extrémité de la ligne, une bande transporteuse (18) pour stocker temporairement des rangées ou lits de produits en vue de leur recyclage sur cette ligne, cette bande transporteuse étant pourvue d'une extrémité mobile (23) servant d'aiguillage et agencée pour transférer les produits stockés audit module de transfert et de dépôt correspondant.

3. Procédé selon la revendication 1, caractérisé en ce que l'on utilise une station de stockage intermédiaire (30) pourvue d'une bande sans fin (31) pour stocker temporairement des produits entre deux modules transversaux successifs correspondant respectivement à deux unités de conditionnement successives de la ligne.

4. Dispositif de conditionnement de produits (14), notamment de produits alimentaires fragiles et délicats, disposés par rangées ou par lits constitués d'un ensemble de rangées parallèles, dans lequel on transfère lesdits produits d'un ruban d'alimentation (15) d'une ligne de conditionnement sur un ruban transversal (11) disposé perpendiculairement à ce ruban d'alimentation, caractérisé en ce qu'il comporte un module de transfert et de dépôt (13) comportant un ruban convoyeur sans fin qui se prolonge par un bec orientable et extensible (19), et un module d'alimentation (16) comportant le ruban d'alimentation (15), ledit ruban d'alimentation étant pourvu d'une extrémité mobile (17) servant d'aiguillage entre le ruban transversal (11) et un ruban d'alimentation (15) suivant, et le ruban convoyeur sans fin étant agencé pour, dans une première phase opératoire, recevoir les produits dudit ruban d'alimentation et pour, dans une deuxième phase opératoire, déposer ces produits sur le ruban transversal (11) d'un module transversal (12) en étendant et en abaissant son bec orientable et extensible (19), puis rétracter et relever ledit bec pour le positionner en attente pour de nouveaux produits.

5. Dispositif selon la revendication 4, caractérisé en ce qu'il comporte, à l'extrémité de la ligne, une bande transporteuse (18) pour stocker temporairement des rangées ou lits de produits en vue de leur recyclage sur cette ligne, cette bande transporteuse étant pourvue d'une extrémité mobile (23) servant d' aiguillage et agencée pour transférer les produits stockés audit module de transfert et de dépôt correspondant.

6. Dispositif selon la revendication 4, caractérisé en ce que le ruban convoyeur sans fin du module de transfert et de dépôt (13) comporte une roue de tension (20) agencée pour se déplacer entre une première position correspondant à la position rétractée du bec orientable et extensible (19), et une seconde position (21) correspondant à la position étendue de ce bec.

7. Dispositif selon la revendication 4, caractérisé en ce que ledit bec orientable et extensible (19) est pivotant et est agencé pour occuper une première position relevée dans laquelle il peut recevoir des produits en provenance du ruban d'alimentation, et une deuxième position abaissée dans laquelle il peut déposer ces produits sur le ruban transversal (11).

8. Dispositif selon la revendication 4, caractérisé en ce qu'il comporte une station de stockage intermédiaire (30) pourvue d'une bande sans fin (31) pour stocker temporairement des produits entre deux modules transversaux successifs correspondant respectivement à deux unités de conditionnement successives de la ligne.

## Claims

1. Method for packaging products, especially fragile, delicate food products (14), arranged in rows or in layers consisting of a unit of parallel rows, in which said products are transferred from a supply belt (15) on a packaging line to a transverse belt (11) perpendicular to this supply belt, characterised in that a transfer and placement module (13) comprising an endless conveyor belt extending in an orientable, extendible tip (19), and a supply module (16) comprising the supply belt (15) are used, said supply belt being provided with one movable extremity serving as a switching means between the transverse belt (11) and a following supply belt (15), and the endless conveyor belt being arranged so that, during a first operating phase, it receives products from said supply belt and, during a second operating phase, it places said products on the transverse belt (11) of a transverse module (12) by extending and lowering its orientable, extendible tip and then retracting and raising said tip into position for awaiting more products.

2. Method according to claim 1, characterised in that at the extremity of the line, a conveyor belt (18) is used to temporarily store rows or layers of products to be recycled onto the line, this conveyor belt having one mobile extremity (23) serving as a switching means, and arranged to transfer the stored products to the corresponding transfer and placement module.

3. Method according to claim 1, characterised in that an intermediate storage station (30) provided with an endless belt (31) is used to temporarily store products between two successive transverse modules respectively corresponding to two successive packaging units on the line.

4. Device for packaging products (14), especially fragile, delicate food products, arranged in rows or in layers consisting of a unit of parallel rows, in which said products are transferred from a supply belt (15) on a packaging line to a transverse belt (11) perpendicular to this supply belt, characterised in that it comprises a transfer and placement module (13) comprising an endless conveyor belt which extends into an orientable, extendible tip (19), and a supply module (16) comprising the supply belt (15), said supply belt being provided with one movable extremity (17) which serves as a switching means between the transverse belt (11) and a following supply belt (15), and the endless conveyor belt being arranged to receive products from said supply belt during a first operating phase, and to place said products on the transverse belt (11) of a transverse module (12), during a second operating phase, by extending and lowering its orientable, extendible tip (19) and then retracting and raising the tip into position for awaiting more products.

5. Device according to claim 4, characterised in that at one end of the line it comprises a conveyor belt (18) for temporarily storing rows or layers of products to be recycled onto said line, said conveyor belt having one movable extremity (23) which serves as a switching means and can transfer the stored products to the corresponding transfer and placement module.

6. Device according to claim 4, characterised in that the endless conveyor belt of the transfer and placement module (13) comprises a tension wheel (20) which is displaceable between a first position, corresponding to the orientable, extendible tip being retracted, and a second position (21), corresponding to the tip being extended.

7. Device according to claim 4, characterised in that said orientable extendible tip (19) is pivotable and is arranged to assume a first raised position for receiving products originating from the supply belt, and a second lowered position for placing said products on the transverse belt (11).

8. Device according to claim 4, characterised in that it comprises an intermediate storage station (30) having an endless belt (31) for temporarily storing products between two successive transverse modules corresponding respectively to two successive packaging units on the line.

## Patentansprüche

1. Verfahren zum Verpacken von Gegenständen, insbesondere von empfindlichen und delikaten Nahrungsmitteln (14), die in Reihen oder in aus parallelen Reihen gebildeten Schichten angeordnet sind, bei dem man diese Produkte von einem zu einer Verpackungsstraße gehörenden Zuführungsband (15) auf ein querlaufendes Band (11) übergibt, das rechtwinklig zu dem Zuführungsband angeordnet ist,
**dadurch gekennzeichnet,** daß
man eine Einheit zur Übergabe und zum Deponieren (13) verwendet, die ein endloses Förderband aufweist, welches durch eine schwenkbare und ausfahrbare Spitze (19) verlängerbar ist, und eine Zuführungseinheit (16), die das Zuführungsband (15) aufweist, wobei dieses Zuführungsband (15) mit einem beweglichen Ende (17) ausgeführt ist, das als Weiche zwischen dem querlaufenden Band (11) und einem nachfolgenden Zuführungsband (15) liegt, und daß das endlose Förderband so ausgeführt ist, daß es in einer ersten Funktionsphase die Produkte des Zuführungsbandes aufnimmt, und in einer zweiten Funktionsphase diese Produkte auf dem querlaufenden Band (11) einer querstehenden Einheit (12) ablegt, indem es seine schwenkbare und ausfahrbare Spitze ausfährt und absenkt, dann diese Spitze zurückfährt und anhebt, um sie in Erwartung neuer Produkte zu positionieren.

2. Verfahren nach Anspruch 1,
**dadurch gekennzeichnet,** daß
man am Ende der Straße ein Förderband (18) verwendet, um zeitweise Reihen oder Schichten von Produkten im Hinblick auf ihre Rückführung auf dieser Straße einzulagern, wobei dieses Förderband mit einem als Weiche dienenden, beweglichen Ende (23) versehen ist, um die eingelagerten Produkte an die entsprechende Einheit zur Übergabe und zum Ablegen zu übergeben.

3. Verfahren nach Anspruch 1,
**dadurch gekennzeichnet,** daß
man eine Station zur Zwischenlagerung (30) verwendet, die mit einem endlosen Band (31) versehen ist, um zeitweise Produkte zwischen zwei aufeinanderfolgenden querstehenden Einheiten zu lagern, die jeweils zwei in der Straße aufeinanderfolgenden Verpackungseinheiten entsprechen.

4. Vorrichtung zum Verpacken von Gegenständen (14) insbesondere von empfindlichen und delikaten Nahrungsmitteln, die in Reihen oder in aus parallelen Reihen gebildeten Schichten angeordnet sind, bei der man diese Produkte von einem zu einer Verpackungsstraße gehörenden Zuführungsband (15) einer Verpackungsstraße auf ein querlaufendes Band (11) übergibt, das rechtwinklig zu dem Zuführungsband angeordnet ist,
**dadurch gekennzeichnet,** daß
sie eine Einheit zur Übergabe und zum Deponieren (13) aufweist, mit einem endlosen Förderband, das durch eine schwenkbare und ausfahrbare Spitze (19) verlängerbar ist, und mit einer Zuführungseinheit (16), die das Zuführungsband (15) aufweist, wobei dieses Zuführungsband mit einem beweglichen Ende (17) versehen ist, das als Weiche zwischen dem querlaufenden Band (11) und einem nachfolgenden Zuführungsband (15) dient, und daß das endlose Förderband so ausgeführt ist, daß es in einer ersten Funktionsphase die Produkte des Zuführungsbandes aufnimmt, und daß es in einer zweiten Funktionsphase diese Produkte auf dem querlaufenden Band (11) einer querstehenden Einheit (12) ablegt, indem es seine schwenkbare und ausfahrbare Spitze (19) ausfährt und absenkt, die Spitze dann zurückfährt und anhebt, um sie in Erwartung neuer Produkte zu positionieren.

5. Vorrichtung nach Anspruch 4,
**dadurch gekennzeichnet,** daß
sie am Ende der Straße ein Transportband (18) aufweist, um Reihen oder Schichten von Produkten im Hinblick auf ihre Rückführung auf dieser Straße zu lagern, wobei dieses Transportband mit einem beweglichen, als Weiche dienenden Ende (23) versehen ist, das dazu dient, die gelagerten Produkte an die entsprechende Einheit zur Übergabe und zum Ablegen zu überführen.

6. Vorrichtung nach Anspruch 4,
**dadurch gekennzeichnet,** daß
das endlose Transportband der Übergabe- und Ablegeeinheit (13) eine Spannrolle (20) aufweist, die sich verschieben kann, und zwar zwischen einer ersten Stellung, die der zurückgefahrenen Stellung der beweglichen und ausfahrbaren Spitze (19) entspricht, und einer zweiten Stellung (21), die der ausgefahrenen Stellung der Spitze entspricht.

7. Vorrichtung nach Anspruch 4,
**dadurch gekennzeichnet,** daß
die bewegliche und ausfahrbare Spitze (19) schwenkbar und so ausgeführt ist, daß sie eine erste, angehobene Stellung einnehmen kann, in welcher sie Produkte aufnehmen kann, die vom Zuführungsband kommen, und eine zweite, abgesenkte Stellung, in der sie die Produkte auf dem querlaufenden Band (11) ablegen kann.

8. Vorrichtung nach Anspruch 4,
**dadurch gekennzeichnet,** daß
sie eine Station zur Zwischenlagerung (30) aufweist, die mit einem endlosen Band (31) ausgestattet ist, um zeitweilig Produkte zwischen zwei aufeinanderfolgenden querstehenden Einheiten zu lagern, die jeweils zwei aufeinanderfolgenden Verpackungseinheiten der Straße entsprechen.
